# EUROPÄISCHE PATENTSCHRIFT

(11) **EP 2 485 858 B1**
(45) Veröffentlichungstag und Bekanntmachung des Hinweises auf die Patenterteilung: **24.07.2013**
(21) Anmeldenummer: 10773531.8
(22) Anmeldetag: 06.10.2010
(51) Int. Cl.: B21K 1/30, F16D 23/02, B22F 3/16, B22F 5/08

(54) **GESINTERTER KUPPLUNGSRING**
SINTERED COUPLING RING
BAGUE D'ACCOUPLEMENT FRITTÉE

(30) Priorität: 07.10.2009 AT 15812009
(43) Veröffentlichungstag der Anmeldung: 15.08.2012
(73) Patentinhaber: Miba Sinter Austria GmbH, 4663 Laakirchen (AT)
(72) Erfinder: KRONBERGER, Christian, A-4655 Vorchdorf (AT); RÖSSLER, Horst, A-4600 Wels (AT); SANDNER, Christian, A-4810 Gmunden (AT)
(74) Vertreter: Hübscher, Helmut
(86) Internationale Anmeldenummer: PCT/AT2010/000371
(87) Internationale Veröffentlichungsnummer: WO 2011/041811

(56) Entgegenhaltungen:
- EP-A1- 0 846 883
- WO-A1-2006/066287
- DE-C1- 10 164 203
- JP-A- 2 129 304

## Beschreibung

### Technisches Gebiet

Die Erfindung bezieht sich auf einen gesinterten Kupplungsring mit einem Kranz von Kupplungszähnen, die von keilförmigen Stirnflächen ausgehende, rückgenommene Flanken und auf der den keilförmigen Stirnflächen gegenüberliegenden Seite einen über den Zahnkopf radial vorstehenden Anschlag aufweisen. Ferner betrifft die Erfindung ein Verfahren sowie ein Kalibrier Werkzeug zur Herstellung eines solchen Kupplungsrings.

### Stand der Technik

Schaltgetriebe für Kraftfahrzeuge weisen mit einer Schaltmuffe zusammenwirkende Kupplungsringe auf, deren Kupplungszähne auf der der Schaltmuffe zugewandten Seite dachartig verlaufende, keilförmig angeordnete Stirnflächen bilden, die das Eingreifen der Klauen der Schaltmuffe in den Zahnkranz des Kupplungsrings erleichtern. Durch eine Flankenrücknahme der Kupplungszähne wird die Eingriffsstellung der Klauen der Schaltmuffe in axialer Richtung gesichert. Zur Herstellung der Flankenrücknahme werden bei einer pulvermetallurgischen Herstellung der Kupplungsringe die Kupplungszähne nach einem Sintern des Kupplungsrings zwischen zwei axial gegeneinander gepressten Matrizen eines Formwerkzeuges einer Pressformung unterworfen (WO 2006/066287 A1). Wird konstruktionsbedingt gefordert, dass die Schaltmuffe durch den Kupplungsring in ihrer axialen Bewegung begrenzt wird, weil beispielsweise der Teilkreisdurchmesser der Kupplungszähne des Kupplungsrings größer als der der Zähne des zu kuppelnden Gangrads ist, so sind die Kupplungszähne des Kupplungsrings auf der den keilförmigen Stirnflächen gegenüberliegenden Stirnseite mit einem über den Zahnkopf radial vorstehenden Anschlag zu versehen. Diese Anschläge werden durch eine spanabhebende Bearbeitung der mit einem entsprechenden Aufmaß gesinterten Kupplungszähne hergestellt, was nicht nur einen zusätzlichen Herstellungsaufwand mit sich bringt, sondern auch die Gefahr eines Bruchs der Anschläge einschließt, wenn die Schaltmuffe mit höherer Geschwindigkeit an die Anschläge anschlägt.

### Darstellung der Erfindung

Der Erfindung liegt somit die Aufgabe zugrunde, einen gesinterten Kupplungsring der eingangs geschilderten Art so auszugestalten, dass die radial über den Zahnkopf vorstehenden Anschläge pulvermetallurgisch gefertigt werden können, ohne eine Bruchgefahr in Kauf nehmen zu müssen.

Die Erfindung löst die gestellte Aufgabe dadurch, dass die Anschläge eine größere Dichte als der übrige Zahnkopf aufweisen.

Durch die im Vergleich zum übrigen Zahnkopf größere Dichte der Anschläge wird die Belastungsfähigkeit dieser Anschläge erheblich verbessert, sodass diese Anschläge den durch die Schaltvorgänge bedingten Belastungen zufolge der axialen Schaltmuffenbewegung durchaus standhalten können. Es kann somit eine spanabhebende Nachbearbeitung der Kupplungszähne des Kupplungsrings entfallen, was vergleichsweise einfache Herstellungsbedingungen ergibt. Besonders vorteilhafte Konstruktionsverhältnisse werden in diesem Zusammenhang dann erreicht, wenn die Anschläge zumindest eine der Dicke des Zahnkopfs entsprechende Breite aufweisen, weil in diesem Fall die Anschlagfläche einer geringeren spezifischen Belastung ausgesetzt wird.

Zur Herstellung eines Kupplungsrings mit einem Kranz von Kupplungszähnen die von keilförmigen Stirnflächen ausgehende, rückgenommene Flanken und auf der den keilförmigen Stirnflächen gegenüberliegende Seite einen über den Zahnkopf radial vorstehenden Anschlag aufweisen, müssen zum Verdichten die Anschläge mit einem entsprechenden Aufmaß gepresst und gesintert werden, um dann bei einer Kalibrierung des gesinterten Kupplungsrings zwischen zwei axial einwirkenden Matrizen eines Kalibrierwerkzeugs die mit Übermaß gesinterten Anschläge während des Kalibriervorgangs auf das Sollmaß zu verdichten. Damit der Pulverrohling für den späteren Kupplungsring im Bereich der Anschläge entsprechend gepresst werden kann, ist im Bereich des Aufmaßes der Anschläge für einen allmählichen Übergang vom Zahnkopf zu den Anschlägen zu sorgen, was beim nachträglichen Kalibrieren des gesinterten Kupplungsrings zu einer erhöhten Dichte in diesem Übergangsbereich und damit zu einer entscheidenden Herabsetzung der Bruchgefahr sorgt. Das Formpressen kleiner Bereiche zu einer hohen Dichte des Sinterwerkstoffs bringt allerdings die Gefahr einer Überlastung der Presswerkzeuge mit sich. Aus diesem Grund ist es vorteilhaft, wenn die Anschläge zumindest eine der Dicke des Zahnkopfs entsprechende Breite aufweisen und daher eine größere Anschlagfläche zur Aufnahme der auftretenden Stoßbelastungen aufweisen, sodass aufgrund der geringeren spezifischen Belastung dieser Anschläge die Verdichtung beim Kalibrieren geringer ausfallen kann.

Wegen der Ausformung von Zahnköpfen mit radial vorstehenden Anschlägen auf der den keilförmigen Stirnflächen gegenüberliegenden Stirnseite der Kupplungszähne wird es notwendig, die Matrize zur Aufnahme der keilförmigen Stirnflächen mit entlang der Zahnköpfe gegen die Anschläge vorstehenden Formansätzen auszubilden, die in entsprechende Aussparungen der Matrize zur Herstellung der Flankenrücknahme eingreifen. Es ergibt sich somit zwischen den beiden Matrizen im Bereich der Anschläge der Kupplungszähne eine abgestufte Teilungsfläche, weil eben die Formansätze für die axiale Verdichtung der Anschläge über die sonst durchgehende, achsnormale Teilungsebene vorstehen, die entlang des Übergangs zwischen den keilförmigen Stirnflächen und den anschließenden rückgenommenen Flanken verläuft. Da aufgrund der axialen Belastungen während des Kalibriervorgangs die Matrizen des Kalibrierwerkzeugs auch einer elastischen radialen Verformung unterliegen, besteht die Gefahr, dass sich die Formansätze der einen Matrize in den zugehörigen Aussparungen der anderen Matrize verklemmen, was zu einem Bruch der Formansätze führen kann. Um diese Bruchgefahr zu unterbinden, kann die die keilförmigen Stirnflächen der Kupplungszähne aufnehmende Matrize über die durch den Übergangsbereich zwischen keilförmigen Stirnflächen und rückgenommenen Flanken bestimmte Teilungsfläche vorstehende Formungsansätze für die Stirnseite der Anschläge und die gegenüberliegende Matrize entsprechende Aussparungen für diese Formansätze ausbilden, wobei die Formansätze der einen Matrize und die Aussparungen für die Formansätze in der anderen Matrize über in radialer Richtung verlaufende Keilflächen in die Teilungsfläche übergehen. Aufgrund dieser in radialer Richtung verlaufenden Keilflächen bedingt eine radiale Aufweitung der Matrizen des Kalibrierwerkzeugs eine geringfügige Bewegung in axialer Richtung, was ein Verklemmen der Formansätze in den Aussparungen und in weiterer Folge einen Werkzeugbruch unterbindet.

### Kurze Beschreibung der Zeichnung

In der Zeichnung ist der Erfindungsgegenstand beispielsweise dargestellt. Es zeigen
- Fig. 1: einen erfindungsgemäßen, gesinterten Kupplungsring nach dem Kalibrieren ausschnittsweise in einer Draufsicht auf die Abwicklung des Kupplungszahnkranzes,
- Fig. 2: einen Schnitt nach der Linie II-II der Fig. 1,
- Fig. 3: eine der Fig. 1 entsprechende Darstellung des gesinterten Kupplungsrings zwischen den teilweise geöffneten Matrizen eines Kalibrierwerkzeugs,
- Fig. 4: einen Schnitt nach der Linie IV-IV der Fig. 3 und
- Fig. 5: einen Zahn des Kupplungsrings in einer stirnseitigen Vorderansicht.

### Weg zur Ausführung der Erfindung

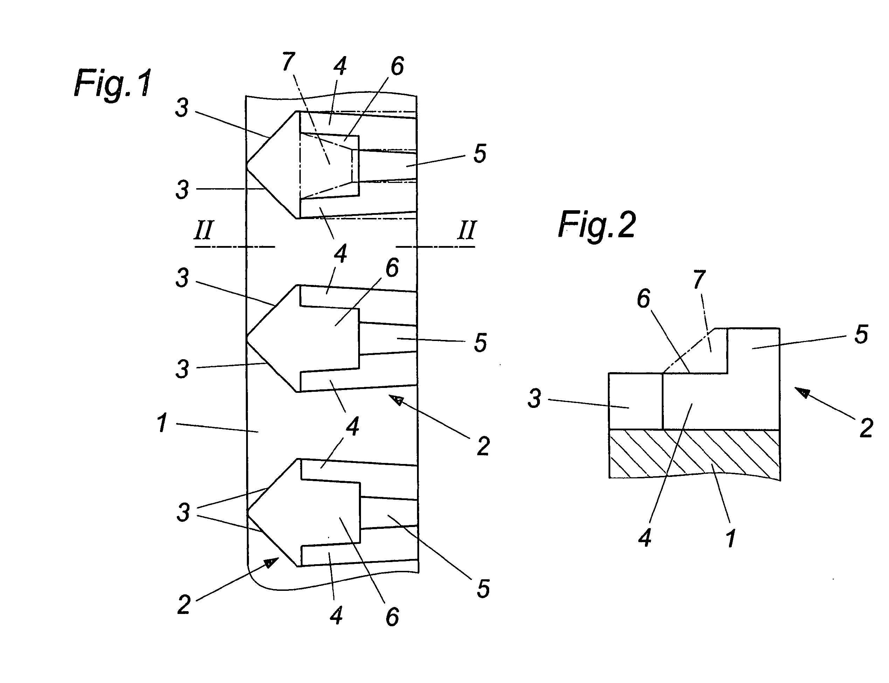

Gemäß den Fig. 1 und 2 weist der gesinterte Kupplungsring 1 einen Kranz von Kupplungszähnen 2 auf, die an einer Stirnseite keilförmige Stirnflächen 3 bilden. An diese Stirnflächen 3 schließen sich rückgenommene Zahnflanken 4 an. Um die axiale Bewegung einer mit dem Kupplungsring 1 zusammenwirkenden Schaltmuffe zu begrenzen, sind die Kupplungszähne 2 auf der den keilförmigen Stirnflächen 3 gegenüberliegenden Stirnseite mit Anschlägen 5 versehen, die über den Zahnkopf 6 radial vorstehen, wie dies insbesondere der Fig. 2 entnommen werden kann.

Zum Herstellen eines solchen Kupplungsrings 1 wird zunächst ein Pulverrohling gepresst und gesintert, dessen Kupplungszähne 2 mit achsparallelen Flanken ausgebildet sind, wie dies in der Fig. 1 für einen Kupplungszahn strichpunktiert angedeutet ist. Außerdem werden die Anschläge 5 mit einem Aufmaß 7 gepresst und gesintert, das in der Fig. 2 ebenfalls strichpunktiert eingezeichnet ist. Beim Kalibrieren des gesinterten Formkörpers werden einerseits die Flankenrücknahmen formgepresst und anderseits die Anschläge 5 verdichtet, indem das Aufmaß 7 durch das Kalibrierwerkzeug auf das Sollmaß gepresst wird.

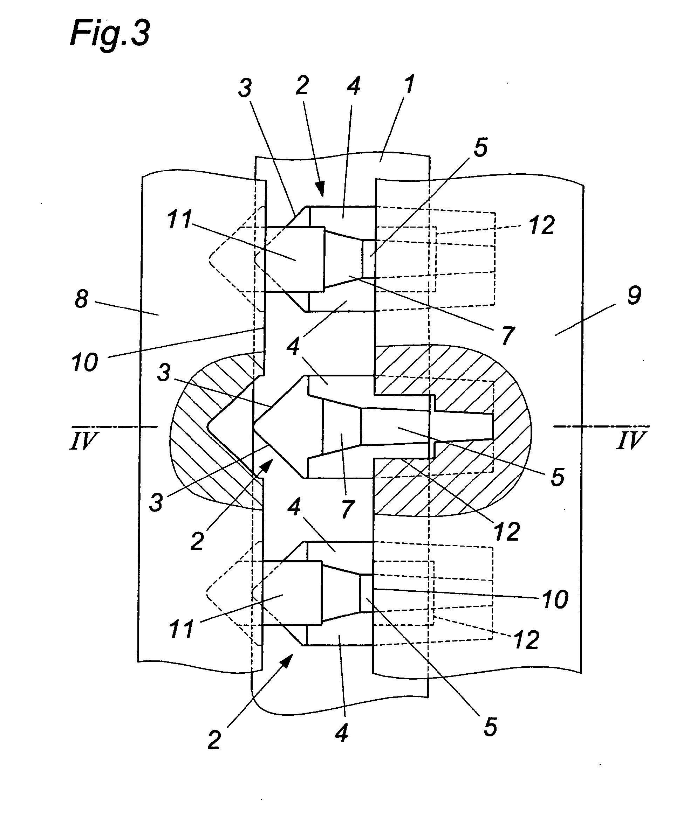

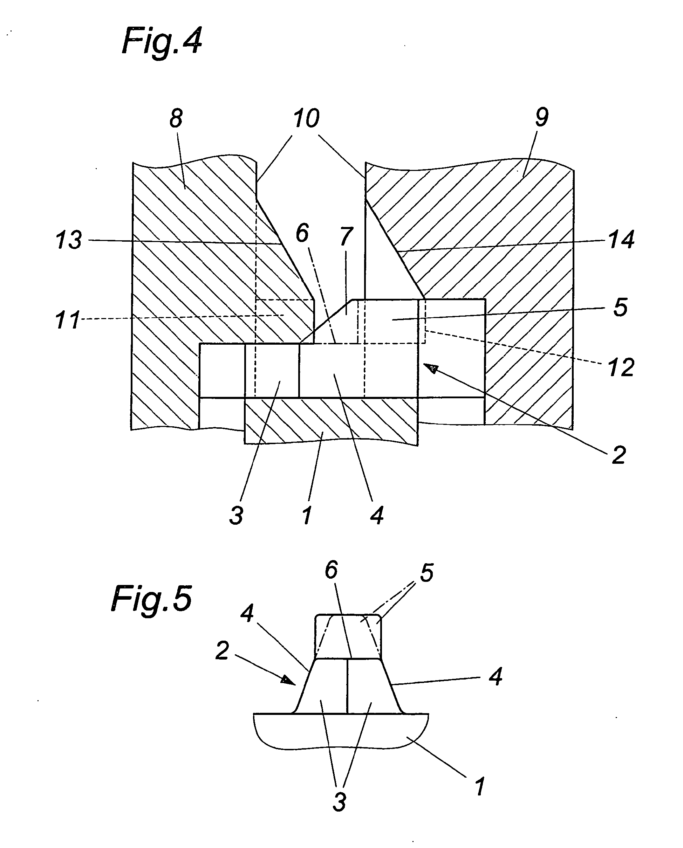

Das in den Fig. 3 und 4 dargestellte Kalibrierwerkzeug weist zwei Matrizen 8 und 9 auf, deren Teilungsflächen 10 im Wesentlichen in einer zur Achse des Kupplungsrings 1 senkrechten Ebene liegen, die entlang des Übergangs zwischen den keilförmigen Stirnflächen 3 und den anschließenden Flanken 4 der Kupplungszähne 2 verläuft. Die die keilförmigen Stirnflächen 3 aufnehmende Matrize 8 weist allerdings über diese zur Achse des Kupplungsrings 1 senkrechte Ebene gegen die gegenüberliegende, zur Ausbildung der Flankenrücknahme dienende Matrize 9 vorstehende Formansätze 11 auf, um mit Hilfe dieser in entsprechende Aussparungen 12 der Matrize 9 eingreifenden Formansätze 11 die Anschläge 5 entsprechend dem Aufmaß 7 zu verdichten. Nach dem Kalibriervorgang, der mit dem Schließen der beiden Matrizen 8, 9 beendet wird, kann das Kalibrierwerkzeug geöffnet und der fertige Kupplungsring 1 entnommen werden, dessen Kupplungszähne 2 eine entsprechende Flankenrückname und radial über den Zahnkopf 6 vorstehende Anschläge 5 aufweisen, die eine durch das Verpressen des jeweiligen Aufmaßes 7 bedingte, höhere Dichte als der übrige Zahnkopf 6 zeigen.

Wie der Fig. 4 entnommen werden kann, gehen die strichliert angedeuteten Formansätze 11 über Keilflächen 13 in die Teilungsfläche 10 über. In gleicher Weise sind die Aussparungen 12 mit keilförmigen Übergangsflächen 14 zur Teilungsfläche 10 versehen. Dies bewirkt beim Schließen der Matrizen 8, 9 und den damit beim Kalibrieren des Kupplungsrings 1 verbundenen Reaktionskräften auf diese Matrizen 8, 9, dass die sich bei der axialen Belastung auch in radialer Richtung elastisch verformenden Matrizen 8, 9 entlang der Keilflächen 13, 14 geringfügig axial verlagern können, was hinsichtlich der Formgenauigkeit keine Rolle spielt, aber ein Verklemmen der Formansätze 11 in den Aussparungen 12 wirksam verhindert, sodass die Bruchgefahr für das Kalibrierwerkzeug entscheidend verringert werden kann.

Die spezifische Belastung der Anschläge 5 hängt von der die Belastung aufnehmenden Anschlagfläche ab. Je kleiner diese Anschlagfläche ist, umso höhere Festigkeiten müssen zur Aufnahme der Belastungen gefordert werden, was wiederum entsprechend höhere Verdichtungen der Anschläge 5 nach sich zieht. Um die spezifische Belastung zu verringern, ist daher die Anschlagfläche der Anschläge 5 zu vergrößern, was aufgrund der pulvermetallurgischen Herstellung der Kupplungsringe ohne weiteres möglich wird. In der Fig. 5 ist ein Kupplungszahn 2 in einer stirnseitigen Ansicht auf die keilförmigen Stirnflächen 3 gezeigt. Der in vollen Linien dargestellte Anschlag 5, der sich in radialer Richtung über den Zahnkopf 6 erhebt, weist gegenüber einem strichpunktiert angedeuteten, dem abfallenden Zahnflankenverlauf angepassten Anschlag 5 aufgrund einer der Dicke des Zahnkopfs 6 angepassten Breite eine deutlich vergrößerte Anschlagfläche auf, sodass eine geringere Verdichtung dieses verbreiterten Anschlags 5 möglich ist, ohne die erforderliche Belastbarkeit zu gefährden. Mit der geringeren Verdichtung werden außerdem die Kalibrierwerkzeuge geschont, was deren Standzeit verbessert.

## Patentansprüche

1. Gesinterter Kupplungsring mit einem Kranz (1) von Kupplungszähnen (2), die von keilförmigen Stirnflächen (3) ausgehende, rückgenommene Flanken (4) und auf der den keilförmigen Stirnflächen (3) gegenüberliegenden Seite einen über den Zahnkopf (6) radial vorstehenden Anschlag (5) aufweisen, **dadurch gekennzeichnet, dass** die Anschläge (5) eine größere Dichte als der übrige Zahnkopf (6) aufweisen.

2. Gesinterter Kupplungsring nach Anspruch 1, **dadurch gekennzeichnet, dass** die Anschläge (5) zumindest einen der Dicke des Zahnkopfs (6) entsprechende Breite aufweisen.

3. Verfahren zum pulvermetallurgischen Herstellen eines Kupplungsrings mit einem Kranz (1) von Kupplungszähnen (2), die von keilförmigen Stirnflächen (3) ausgehende, rückgenommene Flanken (4) und auf der den keilförmigen Stirnflächen (3) gegenüberliegenden Seite einen über den Zahnkopf (6) radial vorstehenden Anschlag (5) aufweisen, wobei der aus einem gepressten Pulverrohling gesinterte Kupplungsring zwischen zwei axial einwirkenden Kalibrierwerkzeugen kalibriert wird, **dadurch gekennzeichnet, dass** der Pulverrohling im Bereich der radial über die Zahnköpfe (6) vorstehenden Anschläge (5) mit einem Aufmaß (7) in axialer Richtung gepresst und gesintert wird und dass die mit Aufmaß (7) gesinterten Anschläge (5) während des Kalibriervorgangs auf das Sollmaß verdichtet werden.

4. Verfahren nach Aspruch 3, **dadurch gekennzeichnet, dass** der Pulverrohling mit Anschlägen (5) gepresst und gesintert wird, die eine die zumindest eine der Dicke des Zahnkopfs (6) entsprechende Breite aufweisen.

5. Kalibrierwerkzeug zum Herstellen eines gesinterten Kupplungsrins, der einen Kranz (1) von Kupplungszähnen (2) mit von keilförmigen Stirnflächen (3) ausgehenden, rückgenommenen Flanken (4) und mit auf der den keilförmigen Stirnflächen (3) gegenüberliegenden Seite über den Zahnkopf (6) radial vorstehenden Anschlägen (5) aufweist, mit zwei axial gegeneinander pressbaren, den Kupplungsring zwischen sich aufnehmenden Matrizen, von denen eine die Hohlform für die Kupplungszähne im Bereich der keilförmigen Stirnflächen und die andere die Hohlform für die Kupplungszähne im Bereich der rückgenommenen Flanken bilden, wobei die Teilungsfläche zwischen den beiden Matrizen entlang des Übergangs zwischen den keilförmigen Stirnflächen und den anschließenden, rückgenommenen Flanken verläuft, **dadurch gekennzeichnet, dass** die die keilförmigen Stirnflächen (3) der Kupplungszähne (2) aufnehmende Matrize (8) über die durch den Übergangsbereich zwischen keilförmigen Stirnflächen (3) und rückgenommenen Flanken (4) bestimmte Teilungsfläche (10) vorstehende Formungsansätze (11) für die Stirnseite der Anschläge (5) und die gegenüberliegende Matrize (9) entsprechende Aussparungen (12) für diese Formansätze (11) ausbilden und dass die Formansätze (11) der einen Matrize (8) und die Aussparungen (12) für die Formansätze (11) in der anderen Matrize (9) über in radialer Richtung verlaufende Keilflächen (13, 14) in die Teilungsfläche (10) übergehen.

## Claims

1. Sintered coupling ring, comprising a ring (1) of coupling teeth (2) which have relieved flanks (4) extending from wedge-shaped end surfaces (3) and, on the side opposite the wedge-shaped end surfaces (3), a stop (5) which protrudes radially over the tooth tip (6), **characterised in that** the stops (5) have a greater density than the remaining tooth tip (6).

2. Sintered coupling ring as claimed in claim 1, **characterised in that** the stops (5) have at least a width which corresponds to the thickness of the tooth tip (6).

3. Method for producing a coupling ring by means of powder metallurgy, the coupling ring comprising a ring (1) of coupling teeth (2) which have relieved flanks (4) extending from wedge-shaped end surfaces (3) and, on the side opposite the wedge-shaped end surfaces (3), a stop (5) which protrudes radially over the tooth tip (6), wherein the coupling ring sintered from a pressed powder blank is calibrated between two axially acting calibration tools, **characterised in that** the powder blank is pressed and sintered in the axial direction with an oversize (7) in the region of the stops (5) protruding radially over the tooth tips (6), and that the stops (5) sintered with an oversize (7) are compressed to the specified dimension during the calibration process.

4. Method as claimed in claim 3, **characterised in that** the powder blank is pressed and sintered with stops (5) which have at least a width which corresponds to the thickness of the tooth tip (6).

5. Calibration tool for producing a sintered coupling ring which comprises a ring (1) of coupling teeth (2) having relieved flanks (4) extending from wedge-shaped end surfaces (3) and having, on the side opposite the wedge-shaped end surfaces (3), stops (5) protruding radially over the tooth tip (6), having two moulds which can be axially pressed against one another and accommodate the coupling ring therebetween, of which one forms the hollow mould for the coupling teeth in the region of the wedge-shaped end surfaces and the other forms the hollow mould for the coupling teeth in the region of the relieved flanks, wherein the dividing surface between the two moulds extends along the transition between the wedge-shaped end surfaces and the adjoining relieved flanks, **characterised in that** the mould (8) accommodating the wedge-shaped end surfaces (3) of the coupling teeth (2) forms mould protrusions (11) for the end side of the stops (5), which mould protrusions protrude over the dividing surface (10) determined by the transition region between wedge-shaped end surfaces (3) and relieved flanks (4), and the opposite mould (9) forms corresponding recesses (12) for these mould protrusions (11), and that the mould protrusions (11) of one mould (8) and the recesses (12) for the mould protrusions (11) in the other mould (9) merge into the dividing surface (10) via wedge surfaces (13, 14) extending in the radial direction.

## Revendications

1. Bague d'accouplement frittée avec une couronne (1) de dents d'accouplement (2) qui présentent des flancs (4) en dépouille à partir des faces frontales (3) en forme de coin et, sur la surface opposée aux faces frontales (3) en forme de coin, une butée (5) radialement en saillie au-dessus de la tête dentée (6), **caractérisée en ce que** les butées (5) présentent une plus grande densité que le reste de la tête dentée (6).

2. Bague d'accouplement frittée selon la revendication 1, **caractérisée en ce que** les butées (5) présentent au moins une largeur correspondant à l'épaisseur de la tête dentée (6).

3. Procédé pour la fabrication selon la technique de la métallurgie des poudres d'une bague d'accouplement avec une couronne (1) de dents d'accouplement (2) qui présentent des flancs (4) en dépouille à partir des faces frontales (3) en forme de coin et, sur la surface opposée aux faces frontales (3) en forme de coin, une butée (5) radialement en saillie au-dessus de la tête dentée (6), la bague d'accouplement frittée à partir d'une ébauche en poudre comprimée étant calibrée entre deux outils de calibrage agissant axialement, **caractérisé en ce que** l'ébauche en poudre est frittée et pressée dans la zone des butées (5) radialement en saillie au-dessus des têtes dentées (6) avec une surépaisseur (7) dans la direction axiale, et **en ce que** les butées (5) frittées en surépaisseur (7) sont comprimées pendant l'opération de calibrage à la dimension nominale.

4. Procédé selon la revendication 3, **caractérisé en ce que** l'ébauche en poudre est frittée et pressée avec des butées (5) qui présentent une largeur correspondant à celle au moins d'une de l'épaisseur de la tête dentée (6).

5. Outil de calibrage pour la fabrication d'une bague d'accouplement frittée, qui présente une couronne (1) de dents d'accouplement (2) avec des flancs (4) en dépouille à partir des faces frontales (3) en forme de coin et, sur la surface opposée aux faces frontales (3) en forme de coin, des butées (5) radialement en saillie au-dessus de la tête dentée (6), avec deux matrices pouvant être pressées l'une contre l'autre axialement, logeant entre elles la bague d'accouplement, dont l'une forme le moule creux pour les dents d'accouplement dans la zone des faces frontales en forme de coin et l'autre, le moule creux pour les dents d'accouplement dans la zone des flancs en dépouille, la surface de séparation étant entre les deux matrices le long du passage entre les faces frontales en forme de coin et les flancs en dépouille consécutifs, **caractérisé en ce que** les matrices (8) logeant les faces frontales (3) en forme de coin des dents d'accouplement (2) forment, sur la surface de séparation (10) définie par la zone de passage entre les faces frontales (3) en forme de coin et les flancs (4) en dépouille, des épaulements de façonnage (11) en saillie pour la face frontale des butées (5) et les évidements (12) correspondant à la matrice (9) opposée pour ces épaulements formés (11) et **en ce que** les épaulements formés (11) d'une matrice (8) et les évidements (12) pour les épaulements formés (11) dans l'autre matrice (9) débordent au-delà des surfaces de coin (13, 14), en direction radiale, dans la surface de séparation (10).
